(19) Europäisches Patentamt / European Patent Office / Office européen des brevets

(11) **EP 4 691 799 A1**

(12) **EUROPEAN PATENT APPLICATION**
published in accordance with Art. 153(4) EPC

(43) Date of publication:
**11.02.2026 Bulletin 2026/07**

(21) Application number: 23938574.3

(22) Date of filing: **06.12.2023**

(51) International Patent Classification (IPC):
**B60C 11/00** (2006.01)      **B60C 1/00** (2006.01)
**C08K 3/013** (2018.01)      **C08L 21/00** (2006.01)
**C08L 101/00** (2006.01)

(52) Cooperative Patent Classification (CPC):
**B60C 1/00; B60C 11/00; C08K 3/013; C08L 21/00; C08L 101/00**

(86) International application number:
**PCT/JP2023/043723**

(87) International publication number:
**WO 2024/241612 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.05.2023 JP 2023084881**

(71) Applicant: **BRIDGESTONE CORPORATION**
**Chuo-ku**
**Tokyo 104-8340 (JP)**

(72) Inventor: **SHIRAISHI, Fumihiro**
**Tokyo 104-8340 (JP)**

(74) Representative: **Marks & Clerk LLP**
**15 Fetter Lane**
**London EC4A 1BW (GB)**

(54) **TWO-WHEEL VEHICLE TIRE**

(57)    An object of the present disclosure is to provide a tire for two-wheeled vehicles having excellent gripping performance without impairing cornering stability. In order to solve the above problem, the present disclosure provides a tire for two-wheeled vehicles including a pair of bead portions and a pair of sidewall portions, and a tread portion continuous with both of the sidewall portions. The tread portion is divided into five sections on a tread portion surface in a tire width direction, the five sections including a center portion including a tire equatorial plane, a pair of edge portions each including a tread edge, and a pair of traction portions each disposed between the center portion and the edge portion. The storage modulus E' at 60°C of a center rubber constituting the center portion, a traction rubber constituting the traction portion, and an edge rubber constituting the edge portion satisfies the following formulae (1) and (2): E' of the center rubber > E' of the edge rubber > E' of the traction rubber ... (1), and E' of the edge rubber > an average value of E' of the center rubber and E' of the traction rubber ... (2).

FIG. 1

**Description**

TECHNICAL FIELD

The present disclosure relates to a tire for two-wheeled vehicles.

BACKGROUND

In tires for two-wheeled vehicles, since the inclination of the tire equatorial plane with respect to the road surface becomes large during cornering of the vehicle, high gripping performance is required. Further, gripping performance can be broadly classified into dry gripping performance (steering stability on a dry road surface) and wet gripping performance (performance for braking on a wet road surface).

In addition, in tires for two-wheeled vehicles, particularly in sports types, high-level steering stability is also required.

As described above, in the tread portion of a tire for two-wheeled vehicles, it is desirable to achieve a high-level balance between dry gripping performance and wet gripping performance (for example, PTL 1).

However, although the tire for two-wheeled vehicles described in PTL 1 is suitable for use in long-distance travel on public roads, there remains room for further improvement in dry gripping performance and wet gripping performance during high-speed cornering.

In order to improve the gripping performance of the tread portion of a tire for two-wheeled vehicles during high-speed cornering, conventionally, a method of increasing the content of filler in the tread portion has been studied. However, this method has the problem that handleability during tire production deteriorates.

In addition, in order to further improve the above-described gripping performance, a method of including a resin in the tread portion has also been studied, but when a resin is included, the peak temperature of the loss tangent $\tan\delta$ of the rubber in the tread portion increases, resulting in the problem that the ease of manifestation (activation performance) of gripping performance is not satisfactory.

CITATION LIST

Patent Literature

PTL 1: JP 2016-112998 A

SUMMARY

(Technical Problem)

Accordingly, an object of the present disclosure is to provide a tire for two-wheeled vehicles having excellent gripping performance without impairing cornering stability.

(Solution to Problem)

The gist configuration of the tire of the present disclosure for solving the above problem is as follows.

[1] A tire for two-wheeled vehicles comprising:

a pair of bead portions and a pair of sidewall portions, and a tread portion continuous with both of the sidewall portions,
wherein the tread portion is divided into five sections on a tread portion surface in a tire width direction, the five sections comprising a center portion including a tire equatorial plane, a pair of edge portions each including a tread edge, and a pair of traction portions each disposed between the center portion and the edge portion, and a storage modulus E' at 60°C of a center rubber constituting the center portion, a traction rubber constituting the traction portion, and an edge rubber constituting the edge portion satisfies the following formulae (1) and (2):

E' of the center rubber > E' of the edge rubber > E' of the traction rubber     (1)

E' of the edge rubber > an average value of E' of the center rubber and E' of the traction rubber     (2).

The tire of the present disclosure described in [1] is excellent in gripping performance without impairing cornering stability.

[2] The tire for two-wheeled vehicles according to [1], wherein a loss tangent tan$\delta$ at 60°C of the center rubber, the traction rubber, and the edge rubber satisfies the following formula (3):

$$\tan\delta \text{ of the edge rubber} > \tan\delta \text{ of the traction rubber} > \tan\delta \text{ of the center rubber} \qquad (3).$$

The tire for two-wheeled vehicles described in [2] can achieve cornering stability and gripping performance at a higher level.

[3] The tire for two-wheeled vehicles according to [1] or [2], wherein peak temperatures $T_p$ of the loss tangents of the center rubber, the traction rubber, and the edge rubber satisfy the following formula (4):

$$T_p \text{ of the traction rubber} > T_p \text{ of the edge rubber} > T_p \text{ of the center rubber} \qquad (4).$$

The tire for two-wheeled vehicles described in [4] can achieve even better gripping performance.

[4] The tire for two-wheeled vehicles according to any one of [1] to [3], wherein each of the center rubber, the traction rubber, and the edge rubber contains a filler, and a content of the filler is 100 parts by mass or more per 100 parts by mass of a rubber component.

The tire for two-wheeled vehicles described in [4] can achieve even better gripping performance.

[5] The tire for two-wheeled vehicles according to any one of [1] to [4], wherein each of the center rubber, the traction rubber, and the edge rubber contains an oil and a resin, and a total content of the oil and the resin is 50 to 150 parts by mass per 100 parts by mass of a rubber component.

The tire for two-wheeled vehicles described in [5] can achieve even better gripping performance without deteriorating handleability during production.

[6] The tire for two-wheeled vehicles according to any one of [1] to [5], wherein the edge rubber contains fine particle silica having a cetyltrimethylammonium bromide adsorption specific surface area (CTAB) of 180 or more.

The tire for two-wheeled vehicles described in [6] can achieve even better gripping performance without deteriorating handleability during production.

[7] The tire for two-wheeled vehicles according to any one of [1] to [6], wherein the edge rubber contains fine particle silica having a cetyltrimethylammonium bromide adsorption specific surface area (CTAB) of 180 or more.

The tire for two-wheeled vehicles described in [7] can achieve excellent wear resistance.

[8] The tire for two-wheeled vehicles according to [4], wherein a content ratio of silica in the filler in the edge rubber is less than 55 mass%.

The tire for two-wheeled vehicles described in [8] can achieve even better gripping performance without deteriorating handleability during production.

(Advantageous Effect)

According to the present disclosure, it is possible to provide a tire for two-wheeled vehicles having excellent gripping performance without impairing cornering stability.

BRIEF DESCRIPTION OF THE DRAWINGS

In the accompanying drawings:

FIG. 1: FIG. 1 is a schematic diagram depicting a cross section in the width direction of a tire for two-wheeled vehicles according to one embodiment of the present disclosure.
FIG. 2: FIG. 2 is a schematic diagram depicting a cross section in the width direction of a tire for two-wheeled vehicles according to another embodiment of the present disclosure.

DETAILED DESCRIPTION

Hereinafter, embodiments of the present disclosure will be described. These descriptions are intended for illustration of the present disclosure and are not intended to limit the present disclosure in any way.
In the present disclosure, the storage modulus E' at 60°C, the loss tangent tan$\delta$ at 60°C, and the peak temperature $T_p$ of the loss tangent of the tread rubber can be measured by the method described in the examples.
Further, in the present specification, both dry gripping performance and wet gripping performance may be collectively referred to simply as gripping performance.

In the present disclosure, unless otherwise specified, the amount of each component in the rubber refers to the amount in each of the center, traction, and edge rubbers, and not the amount in the rubber of the entire tread portion.

In the present disclosure, Mw is calculated as a standard polystyrene-converted value by gel permeation chromatography (GPC).

<Tire for Two-Wheeled Vehicles>

A tire for two-wheeled vehicles according to the present disclosure comprises a pair of bead portions and a pair of sidewall portions, and a tread portion continuous with both of the sidewall portions, wherein the tread portion, on the tread portion surface, in the tire width direction, is divided into five sections comprising a center portion including the tire equatorial plane, a pair of edge portions each including a tread edge, and a pair of traction portions each disposed between the center portion and the edge portion.

The tire of the present embodiment comprises a carcass layer including a steel cord, the steel cord being composed of steel filaments, and 20 mass% or more of the total mass of the steel filaments in the carcass layer is derived from recycled iron.

When the proportion of steel filaments derived from recycled iron in the entire steel cord of the carcass layer is 20 mass% or more, it is possible to sufficiently recycle resources while suppressing a decrease in the durability of the carcass layer.

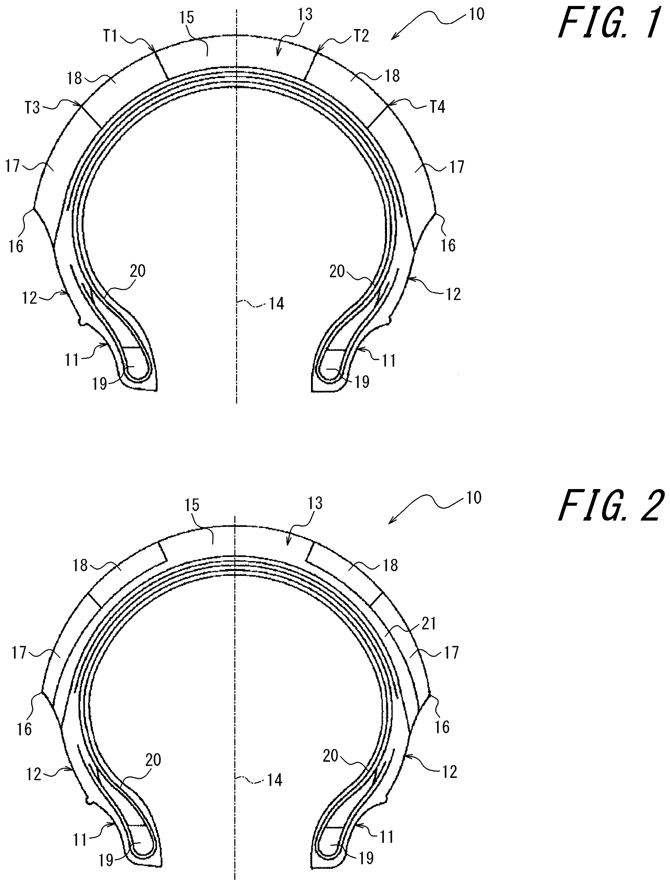

Here, FIG. 1 is a schematic diagram depicting a cross section in the width direction of a tire for two-wheeled vehicles according to one embodiment of the present disclosure. In FIG. 1, the tire for two-wheeled vehicles 10 comprises a pair of bead portions 11 and a pair of sidewall portions 12, and a tread portion 13 continuous with both sidewall portions 12. The tread portion 13, on the tread portion surface, in the tire width direction, is divided into five sections comprising a center portion 15 including the tire equatorial plane 14, a pair of edge portions 17 each including a tread edge 16, and a pair of traction portions 18 each disposed between the center portion 15 and the edge portion 17. In the example of FIG. 1, each bead portion 11 has a bead core 19, and one or more carcass layers 20 are provided so as to extend in a toroidal shape between the pair of bead cores 19. The carcass layer 20 is formed by covering a plurality of carcass cords with rubber.

Further, the tread portion 13 extends across between both sidewall portions 12. In the present disclosure, the tread portion is a divided tread divided into five sections, namely, the center portion, two traction portions, and two edge portions, as described above.

(Tread Portion)

The tread portion, as described above, is a divided tread divided into five sections, and the storage modulus E' at 60°C of the center rubber constituting the center portion, the traction rubber constituting the traction portion, and the edge rubber constituting the edge portion satisfies the following formulae (1) and (2):

E' of the center rubber > E' of the edge rubber > E' of the traction rubber        (1)

E' of the edge rubber > average value of E' of the center rubber and E' of the traction rubber        (2)

This is a characteristic feature.

When the tread portion is divided into five sections, the edge portion and the traction portion tend to require gripping performance during cornering situations, the center portion and the traction portion tend to require gripping performance during straight running, and the center portion tends to require wear resistance. Therefore, in the present disclosure, by satisfying the above formula (1), it is possible to enhance gripping performance during cornering situations and wear resistance during straight running, and by satisfying the above formula (2), it is possible to achieve both cornering stability and gripping performance.

Note that the storage modulus E' at 60°C of the center rubber, the traction rubber, and the edge rubber is not particularly limited as long as the relationships of the above formulae (1) and (2) can be satisfied. For example, the storage modulus E' at 60°C of the center rubber may be 8 to 12 Pa, that of the traction rubber may be 4 to 8 Pa, and that of the edge rubber may be 7 to 11 Pa.

Further, in the tread portion, the loss tangent $\tan\delta$ at 60°C of the center rubber, the traction rubber, and the edge rubber preferably satisfies the following formula (3):

$\tan\delta$ of the edge rubber > $\tan\delta$ of the traction rubber > $\tan\delta$ of the center rubber        (3)

By satisfying the above formula (3) for the loss tangent tanδ at 60°C of the center rubber, the traction rubber, and the edge rubber, gripping performance, particularly gripping performance during straight running, can be further enhanced.

Note that the loss tangent tanδ at 60°C of the center rubber, the traction rubber, and the edge rubber is not particularly limited as long as the relationship of the above formula (3) can be satisfied. For example, the loss tangent tanδ at 60°C of the center rubber may be 0.20 to 0.30 Pa, the loss tangent tanδ at 60°C of the traction rubber may be 0.28 to 0.42 Pa, and the loss tangent tanδ at 60°C of the edge rubber may be 0.35 to 0.50 Pa.

Furthermore, in the tread portion, the peak temperature $T_p$ of the loss tangent of the center rubber, the traction rubber, and the edge rubber preferably satisfies the following formula (4):

$$T_p \text{ of the traction rubber} > T_p \text{ of the edge rubber} > T_p \text{ of the center rubber} \tag{4}$$

By satisfying the above formula (4) for the peak temperature $T_p$ of the loss tangent of the center rubber, the traction rubber, and the edge rubber, it is possible to enhance gripping performance while maintaining wear resistance. In the tread divided into five sections, the edge portion and the traction portion particularly require gripping performance during cornering situations, and the center portion requires wear resistance. In order to ensure the gripping performance of the tread rubber, it is effective to increase the peak temperature of the loss tangent tanδ of the tread rubber. However, when this peak temperature is increased, gripping performance is less likely to be exhibited unless the temperature of the rubber becomes high, resulting in low activation performance. In addition, when the above peak temperature is increased, the elastic modulus of the tread rubber increases, and the rubber becomes harder, making it difficult to follow the shape of the road surface. On the other hand, in order to enhance the wear resistance of the tread rubber, it is effective to lower the peak temperature of the loss tangent tanδ of the tread rubber. Therefore, in the present disclosure, by satisfying the above formula (4) for the peak temperature $T_p$ of the loss tangent of the center rubber, the traction rubber, and the edge rubber, wear resistance is improved while enhancing gripping performance.

The peak temperature $T_p$ of the loss tangent of the traction rubber and the edge rubber only needs to satisfy the above formula (4) and is not particularly limited, but may be, for example, -40 to 20°C.

Further, from the viewpoint of achieving a higher balance between wear resistance and gripping performance, it is preferable that the peak temperature $T_p$ of the loss tangent of both the traction rubber and the edge rubber is in the range of -10 to 5°C.

Note that the difference between the highest $T_p$ of the edge rubber and the next highest $T_p$ of the traction rubber is not particularly limited, but may be, for example, 1 to 15°C, and the difference between the $T_p$ of the traction rubber and the lowest $T_p$ of the center rubber is not particularly limited, but may be, for example, 1 to 15°C.

(Rubber Composition Constituting the Tread Portion)

The rubber composition constituting the center rubber, the traction rubber, and the edge rubber in the tread portion (hereinafter, a rubber composition applicable to all of the center rubber, traction rubber, and edge rubber may simply be referred to as "rubber composition") is not particularly limited as long as it can satisfy the relationships of the above formulae (1) and (2).

As the rubber composition, for example, a rubber composition containing a rubber component and a filler can be used.

- Rubber Component

The rubber component contained in the rubber composition is not particularly limited, but from the viewpoint of enhancing gripping performance and manufacturing handleability, it is preferable to contain at least one selected from styrene-butadiene rubber (SBR) and butadiene rubber (BR), and more preferably to contain both styrene-butadiene rubber (SBR) and butadiene rubber (BR).

The styrene-butadiene rubber (SBR) and butadiene rubber (BR) are relatively less likely to adhere and have excellent fracture properties. In addition, styrene-butadiene rubber is highly effective in improving the gripping performance of the tire, while butadiene rubber is highly effective in improving wear resistance. Therefore, by including at least one selected from styrene-butadiene rubber (SBR) and butadiene rubber (BR) as the rubber component, the rubber composition becomes suitable for the tread.

The styrene-butadiene rubber (SBR) and butadiene rubber (BR) may be unmodified or modified, or may be a blend of unmodified and modified types.

In the rubber component, the total proportion of styrene-butadiene rubber (SBR) and butadiene rubber (BR) is preferably 70 mass% or more, more preferably 80 mass% or more, still more preferably 90 mass% or more, and may be 100 mass%.

In the rubber component, the proportion of styrene-butadiene rubber (SBR) is preferably 70 mass% or more, more preferably 80 mass% or more, and preferably 100 mass% or less, more preferably 90 mass% or less.

Further, in the rubber component, the proportion of butadiene rubber (BR) is preferably 0 mass% or more, more preferably 10 mass% or more, and preferably 30 mass% or less, more preferably 20 mass% or less.

The rubber component may further contain other rubbers. In such a case, the content of other rubbers in the rubber component is preferably 30 mass% or less, more preferably 20 mass% or less, still more preferably 10 mass% or less, and may be 0 mass%. Examples of such other rubbers include natural rubber (NR), isoprene rubber (IR), chloroprene rubber (CR), styrene-isoprene rubber (SIR), acrylonitrile-butadiene rubber (NBR), butyl rubber (IIR), and halogenated butyl rubber. These other rubbers may be used alone or in combination of two or more.

The rubber component may be oil-extended in part or in whole. However, when the rubber component is oil-extended, the extender oil is classified as an oil described later.

- Filler

The rubber composition constituting the center rubber, the traction rubber, and the edge rubber preferably contains, in addition to the rubber component, a filler.

When the rubber composition contains a filler, the content thereof is preferably 90 parts by mass or more, more preferably 100 parts by mass or more, still more preferably 110 parts by mass or more, per 100 parts by mass of the rubber component.

This can further enhance physical properties such as gripping performance, cornering stability, and wear resistance.

The filler preferably contains at least one of silica and carbon black, and more preferably contains both silica and carbon black. This can further enhance physical properties such as gripping performance, cornering stability, and wear resistance.

The carbon black can reinforce the tread portion and improve fracture properties, and also contributes to improving the gripping performance of the tire.

The carbon black is not particularly limited, and examples include GPF, FEF, HAF, ISAF, and SAF grades of carbon black. These carbon blacks may be used alone or in combination of two or more. The carbon black may also be recycled carbon black.

In the present specification, "recycled carbon black" refers to carbon black obtained by recovering from waste materials subjected to recycling. Examples of such waste materials subjected to recycling include rubber products containing carbon black (particularly vulcanized rubber products) such as used rubber and used tires, and waste oil. "Recycled carbon black" is different from carbon black produced directly from hydrocarbons such as petroleum or natural gas, i.e., carbon black that is not a recycled product. Note that "used" here includes not only those actually used and then discarded, but also those manufactured but discarded without actual use.

The content of carbon black in the rubber composition is preferably 10 parts by mass or more, more preferably 20 parts by mass or more, per 100 parts by mass of the rubber component, from the viewpoint of wear resistance and gripping performance of the tire. Further, from the viewpoint of low heat generating property and the like of the rubber composition, the content of carbon black in the rubber composition is preferably 140 parts by mass or less, more preferably 130 parts by mass or less, per 100 parts by mass of the rubber component.

The silica contributes to improving the gripping performance (particularly wet gripping performance) of the tire to which the rubber composition is applied.

The content of silica in the filler may be appropriately adjusted. Silica may be used alone or in combination of two or more types.

For example, when the rubber composition is used for the center rubber, the content ratio of silica in the total amount of the filler is 60 to 95 mass%, and preferably 85 to 95 mass%.

Further, when the rubber composition is used for the traction rubber, the content ratio of silica in the total amount of the filler is 60 to 95 mass%, and preferably 70 to 90 mass%.

Furthermore, when the rubber composition is used for the edge rubber, the content ratio of silica in the total amount of the filler is 30 to 60 mass%, and preferably 30 mass% or more and less than 55 mass%.

The silica is not particularly limited and may be appropriately selected according to the purpose. Examples of silica include wet silica (hydrous silicate), dry silica (anhydrous silicate), calcium silicate, and aluminum silicate. Among these, wet silica and dry silica are preferable from the viewpoint of improving wear resistance and wet gripping performance.

From the viewpoint of reducing environmental load, silica derived from plant silicate is also preferable as the silica. Such plant silicate is present, for example, in plants of the classes Bryopsida, Pteridophyta, Equisetopsida, Cucurbitaceae, Urticaceae, and Poaceae. Among these plants, Poaceae plants are preferable. Examples of Poaceae plants include rice, bamboo, and sugarcane, with rice being particularly preferable. Since rice is widely cultivated for food, it can be locally procured in a wide area, and rice husks are generated in large quantities as industrial waste, making it easy to secure the quantity. Therefore, from the viewpoint of ease of procurement, silica derived from rice husks (hereinafter also referred to as "rice husk silica") is particularly preferable as the silica. By using rice husk silica, rice husks, which are industrial waste, can be effectively utilized, and since raw materials can be locally procured near the tire manufacturing plant, energy and cost for transportation and storage can be reduced, which is preferable from various environmental perspectives. The rice husk silica may be a powder of rice husk charcoal obtained by carbonizing rice husks by heating, or may be precipitated silica produced by preparing an alkali silicate aqueous solution by extracting rice husk ash generated when rice husks are combusted as fuel in a biomass boiler with alkali, and producing by a wet process using the alkali silicate aqueous solution. The method for producing the rice husk charcoal is not particularly limited, and various known methods can be used. For example, rice husk charcoal can be obtained by thermally decomposing rice husks by steaming in a kiln. The rice husk charcoal thus obtained can be pulverized using a known pulverizer (for example, a ball mill), and classified and sorted into a predetermined particle size range to obtain a powder of rice husk charcoal. Further, the rice husk-derived precipitated silica can be produced by the method described in JP 2019-38728 A or the like.

The silica preferably has a nitrogen adsorption specific surface area (BET method) of 80 $m^2/g$ or more and less than 330 $m^2/g$. When the nitrogen adsorption specific surface area (BET method) of the silica is 80 $m^2/g$ or more, the tire to which the rubber composition is applied can be sufficiently reinforced. Further, when the nitrogen adsorption specific surface area (BET method) of the silica is less than 330 $m^2/g$, the elastic modulus of the rubber composition does not become excessively high, and the wet gripping performance of the tire to which the rubber composition is applied is improved. From the viewpoint of further improving the fracture properties of the tire, the nitrogen adsorption specific surface area (BET method) of the silica is preferably 100 $m^2/g$ or more, more preferably 120 $m^2/g$ or more, more preferably 140 $m^2/g$ or more, more preferably 150 $m^2/g$ or more, more preferably 170 $m^2/g$ or more, more preferably 180 $m^2/g$ or more, more preferably 190 $m^2/g$ or more, and still more preferably 195 $m^2/g$ or more. Further, from the viewpoint of further improving the wet gripping performance of the tire, the nitrogen adsorption specific surface area (BET method) of the silica is preferably 300 $m^2/g$ or less, more preferably 280 $m^2/g$ or less, and still more preferably 270 $m^2/g$ or less.

Further, the silica preferably has a cetyltrimethylammonium bromide adsorption specific surface area (CTAB) of 150 $m^2/g$ or more, and more preferably 150 to 300 $m^2/g$. When the CTAB is 150 $m^2/g$ or more, the tire to which the rubber composition is applied can be sufficiently reinforced. Moreover, when the CTAB is 300 $m^2/g$ or less, the elastic modulus of the rubber composition does not become excessively high, and the wet gripping performance of the tire to which the rubber composition is applied is improved.

Furthermore, it is preferable that the silica contained in the rubber composition constituting the edge rubber is fine particle silica having a cetyltrimethylammonium bromide adsorption specific surface area (CTAB) of 180 or more. By this means, both the cornering stability performance and gripping performance of the tire for two-wheeled vehicles can be achieved at a higher level.

- Oil, Resin

The rubber compositions constituting the center rubber, the traction rubber, and the edge rubber preferably each contain an oil and a resin. This is because both the cornering stability performance and gripping performance of the tire for two-wheeled vehicles can be achieved at a higher level.

Further, when the rubber composition contains an oil and a resin, the total content of these is preferably 50 to 150 parts by mass, and more preferably 20 to 100 parts by mass, per 100 parts by mass of the rubber component. Thus, the cornering stability performance and gripping performance of the tire for two-wheeled vehicles can be further enhanced without impairing wear resistance or steering stability.

As the oil, oils commonly included in known rubber compositions can be used. Examples include petroleum softeners such as aromatic oils, paraffin oils, and naphthenic oils; and vegetable softeners such as palm oil, castor oil, cottonseed oil, and soybean oil.

The content of the oil is not particularly limited and can be appropriately adjusted. For example, the content of the oil is preferably 5 to 150 parts by mass, and more preferably 40 to 60 parts by mass, per 100 parts by mass of the rubber component. In the present disclosure, the oil may be an extender oil of the rubber component or a compounding agent, and the content refers to the combined amount of the extender oil and the compounding agent. From the viewpoint of handleability, the preferred mass ratio of extender oil to compounding agent oil component is 1:1 to 10:1.

The resin is not particularly limited and can be appropriately selected according to the purpose. Examples include $C_5$-based resins, $C_5$-$C_9$-based resins, $C_9$-based resins, terpene-based resins (including terpene-aromatic compound-based resins), dicyclopentadiene-based resins, rosin-based resins, and alkylphenol-based resins. These resins may be used alone or in combination of two or more.

The $C_5$-based resin includes aliphatic petroleum resins obtained by (co)polymerizing a $C_5$ fraction obtained by thermal cracking of naphtha in the petrochemical industry. The $C_5$ fraction usually contains olefinic hydrocarbons such as 1-pentene, 2-pentene, 2-methyl-1-butene, 2-methyl-2-butene, and 3-methyl-1-butene, and diolefinic hydrocarbons such as 2-methyl-1,3-butadiene, 1,2-pentadiene, 1,3-pentadiene, and 3-methyl-1,2-butadiene. The $C_5$-based resin may be a commercially available product.

The $C_5$-$C_9$-based resin refers to a $C_5$-$C_9$-based synthetic petroleum resin. Examples of the $C_5$-$C_9$-based resin include solid polymers obtained by polymerizing a petroleum-derived $C_5$-$C_{11}$ fraction using a Friedel-Crafts catalyst such as $AlCl_3$ or $BF_3$. More specifically, copolymers mainly composed of styrene, vinyltoluene, α-methylstyrene, indene, and the like can be mentioned. From the viewpoint of compatibility with the rubber component, a resin with a low content of $C_9$ or higher components is preferred as the $C_5$-$C_9$-based resin. Here, "low content of $C_9$ or higher components" means that the content of $C_9$ or higher components in the total resin is less than 50 mass%, preferably 40 mass% or less. The $C_5$-$C_9$-based resin may be a commercially available product.

The $C_9$-based resin refers to a $C_9$-based synthetic petroleum resin, and specifically refers to a solid polymer obtained by polymerizing a $C_9$ fraction using a Friedel-Crafts catalyst such as $AlCl_3$ or $BF_3$. Examples of the $C_9$-based resin include copolymers mainly composed of indene, α-methylstyrene, vinyltoluene, and the like.

The terpene-based resin is a solid resin obtained by compounding turpentine oil, which is obtained simultaneously with rosin from pine trees, or a polymerized component separated therefrom, and polymerizing it using a Friedel-Crafts catalyst. Examples include β-pinene resin and α-pinene resin. The terpene-based resin also includes terpene-aromatic compound-based resins, and representative examples of such terpene-aromatic compound-based resins include terpene-phenol resin and styrene-terpene resin. The terpene-phenol resin can be obtained by reacting terpenes and various phenols using a Friedel-Crafts catalyst, or further condensing with formalin. The styrene-terpene resin can be obtained by reacting styrene and terpenes using a Friedel-Crafts catalyst. There is no particular limitation on the terpenes used as raw materials, but monoterpene hydrocarbons such as α-pinene and limonene are preferred, with those containing α-pinene being more preferred, and especially α-pinene being most preferred.

The dicyclopentadiene-based resin refers to a resin obtained by polymerizing dicyclopentadiene using a Friedel-Crafts catalyst such as $AlCl_3$ or $BF_3$.

The resin may also include, for example, a resin obtained by copolymerizing a $C_5$ fraction and dicyclopentadiene (DCPD) ($C_5$-DCPD-based resin). Here, when the content of dicyclopentadiene-derived components in the total resin is 50 mass% or more, the $C_5$-DCPD-based resin is included in the dicyclopentadiene-based resin. When the content of dicyclopentadiene-derived components in the total resin is less than 50 mass%, the $C_5$-DCPD-based resin is included in the $C_5$-based resin. The same applies even if a small amount of a third component or the like is included.

Furthermore, from the viewpoint of obtaining even better gripping performance of the tire, it is preferable that the rubber composition constituting the edge rubber contains a hydrogenated resin as the resin. The hydrogenated resin refers to a resin obtained by reductive hydrogenation of a resin.

As the resin serving as a raw material for the hydrogenated resin, among the resins described above, $C_5$-based resins, $C_5$-$C_9$-based resins, $C_9$-based resins, terpene-based resins (including terpene-aromatic compound-based resins), and dicyclopentadiene-based resins can be used. These resins may be used alone or in combination of two or more.

Here, the hydrogenated resin may have a softening point exceeding 110°C and a weight-average molecular weight in terms of polystyrene of 200 to 1600 g/mol.

If the softening point of the hydrogenated resin is 110°C or less, the edge portion to which the rubber composition is applied cannot be sufficiently reinforced. From the viewpoint of fracture properties and wear resistance of the tire, the softening point of the hydrogenated resin is preferably 116°C or more, more preferably 120°C or more, even more preferably 123°C or more, still more preferably 126°C or more, and particularly preferably 128°C or more. From the viewpoint of gripping performance of the tire, the softening point of the hydrogenated resin is preferably 160°C or less, more preferably 150°C or less, even more preferably 145°C or less, and particularly preferably 141°C or less.

If the weight-average molecular weight in terms of polystyrene of the hydrogenated resin is less than 200 g/mol, the hydrogenated resin will precipitate from the tire, making it difficult to sufficiently exhibit the effects of the hydrogenated resin. If it exceeds 1600 g/mol, the hydrogenated resin becomes less compatible with the rubber component.

From the viewpoint of suppressing precipitation of the hydrogenated resin from the tire and preventing deterioration of the tire appearance, the weight-average molecular weight in terms of polystyrene of the hydrogenated resin is preferably 300 g/mol or more, more preferably 400 g/mol or more, even more preferably 500 g/mol or more, preferably 550 g/mol or more, more preferably 600 g/mol or more, even more preferably 650 g/mol or more, and particularly preferably 700 g/mol or more. Further, from the viewpoint of improving the compatibility of the hydrogenated resin with the rubber component and further enhancing the effects of the hydrogenated resin, the weight-average molecular weight in terms of polystyrene of the hydrogenated resin is more preferably 1570 g/mol or less, more preferably 1530 g/mol or less, even more preferably 1500 g/mol or less, still more preferably 1470 g/mol or less, more preferably 1430 g/mol or less, more preferably 1400 g/mol or less, more preferably 1370 g/mol or less, more preferably 1330 g/mol or less, more preferably 1300 g/mol or less, more preferably 1200 g/mol or less, more preferably 1100 g/mol or less, more preferably 1000 g/mol or less, and particularly preferably 950 g/mol or less.

The ratio (Ts$_{HR}$/Mw$_{HR}$) of the softening point (Ts$_{HR}$) (unit: °C) to the weight-average molecular weight in terms of polystyrene (Mw$_{HR}$) (unit: g/mol) of the hydrogenated resin is preferably 0.075 or more, more preferably 0.083 or more, even more preferably 0.095 or more, still more preferably 0.104 or more, more preferably 0.14 or more, more preferably 0.155 or more, and particularly preferably 0.158 or more. The ratio (Ts$_{HR}$/Mw$_{HR}$) is preferably 0.19 or less, more preferably 0.18 or less, and particularly preferably 0.17 or less. The softening point and weight-average molecular weight in terms of polystyrene of the hydrogenated resin can be determined by the method described in the examples below.

Further, from the viewpoint of improving the compatibility between the rubber component and the hydrogenated resin and further improving the gripping performance of the tire to which the rubber composition is applied, the hydrogenated resin is preferably at least one selected from the group consisting of hydrogenated C$_5$-based resin, hydrogenated C$_5$-C$_9$-based resin, hydrogenated dicyclopentadiene-based resin (hydrogenated DCPD-based resin), and hydrogenated terpene-based resin, more preferably at least one selected from the group consisting of hydrogenated C$_5$-based resin and hydrogenated C$_5$-C$_9$-based resin, and particularly preferably hydrogenated C$_5$-based resin. It is also preferable that the resin is a resin having at least a hydrogenated DCPD structure or a hydrogenated cyclic structure in the monomer.

The content of the resin in the rubber compositions constituting the center rubber, the traction rubber, and the edge rubber is not particularly limited and can be appropriately adjusted. For example, the content is preferably 5 to 150 parts by mass, and more preferably 15 to 100 parts by mass, per 100 parts by mass of the rubber component.

- Styrene-Based Thermoplastic Elastomer

The rubber compositions constituting the center rubber, the traction rubber, and the edge rubber may contain a styrene-based thermoplastic elastomer (TPS). The styrene-based thermoplastic elastomer (TPS) has a styrene-based polymer block (hard segment) and a conjugated diene-based polymer block (soft segment), with the styrene-based polymer portion forming a physical crosslink as a bridging point, while the conjugated diene-based polymer block imparts rubber elasticity. The double bonds of the conjugated diene-based polymer block (soft segment) may be partially or wholly hydrogenated. Note that, while the styrene-based thermoplastic elastomer (TPS) is thermoplastic, the rubber component (preferably diene-based rubber) is not thermoplastic. Therefore, in this specification, the styrene-based thermoplastic elastomer (TPS) is not included in the rubber component. The content of the styrene-based thermoplastic elastomer (TPS) is preferably in the range of 1 to 30 parts by mass per 100 parts by mass of the rubber component.

Examples of the styrene-based thermoplastic elastomer (TPS) include styrene/butadiene/styrene (SBS) block copolymer, styrene/isoprene/styrene (SIS) block copolymer, styrene/butadiene/isoprene/styrene (SBIS) block copolymer, styrene/isoprene (SI) block copolymer, styrene/butadiene/isoprene (SBI) block copolymer, styrene/ethylene/butylene/styrene (SEBS) block copolymer, styrene/ethylene/propylene/styrene (SEPS) block copolymer, styrene/ethylene/ethylene/propylene/styrene (SEEPS) block copolymer, styrene/ethylene/butylene (SEB) block copolymer, styrene/ethylene/propylene (SEP) block copolymer, and styrene/ethylene/ethylene/propylene (SEEP) block copolymer.

- Other Components

The rubber composition for tires of the present disclosure may, in addition to the above-described rubber component, filler, oil, resin, and styrene-based thermoplastic elastomer, further contain, as necessary, various components commonly used in the rubber industry, such as silane coupling agents, age resistors, stearic acid, zinc oxide (zinc white), vulcanization accelerators, and vulcanizing agents, as long as they do not impair the object of the present disclosure. Commercially available products can be suitably used as these compounding agents.

Examples of the silane coupling agent include bis(3-triethoxysilylpropyl)tetrasulfide, bis(3-triethoxysilylpropyl) trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-dimethoxymethylsilylpropyl)tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyltetrasulfide. The content of the silane coupling agent is preferably in the range of 2 to 20 parts by mass, and more preferably in the range of 5 to 15 parts by mass, per 100 parts by mass of the silica.

Examples of the age resistor include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the age resistor is not particularly limited, but is preferably in the range of 0.1 to 15 parts by mass, and more preferably 1 to 10 parts by mass, per 100 parts by mass of the rubber component.

Examples of the vulcanization accelerator include sulfenamide vulcanization accelerator, guanidine vulcanization accelerator, thiazole vulcanization accelerator, thiuram vulcanization accelerator, and dithiocarbamate vulcanization accelerator. Examples of the vulcanizing agent include sulfur and the like. The total content of the vulcanization system (vulcanization package) including the vulcanization accelerator, vulcanizing agent, and stearic acid is not particularly limited, but is preferably in the range of 1 to 25 parts by mass, and more preferably in the range of 5 to 20 parts by mass, per 100 parts by mass of the rubber component.

- Tread Portion

The center rubber, traction rubber, and edge rubber constituting the tread portion can be produced by compounding the above-described rubber component and other components, kneading them using a known kneader such as a Banbury mixer, roll, or internal mixer, and vulcanizing. The kneading of each component may be performed in a single stage or divided into two or more stages. For example, when kneading in two stages, the maximum temperature in the first stage is preferably 140 to 160°C, and the maximum temperature in the second stage is preferably 90 to 120°C. The vulcanization conditions are not particularly limited, and known vulcanization conditions for tires for two-wheeled vehicles can be used.

Further, as illustrated in FIG. 1, the peripheral length (curved length) in the width direction on the tread portion surface of the center portion 15, the traction portion 18, and the edge portion 17 may be appropriately adjusted. In FIG. 1, the curved length Lc in the width direction on the tread portion surface of the center portion is the curved length from point T1 to point T2. In FIG. 1, the curved length $L_S$ in the width direction on the tread portion surface of the traction portion 18 is the sum of the curved length from point T3 to point T1 and the curved length from point T4 to point T2. In FIG. 1, the curved length $L_E$ in the width direction on the tread portion surface of the edge portion 17 is the sum of the curved length from the left tread edge 16 to point T3 and the curved length from the right tread edge 16 to point T4. In the present disclosure, the peripheral length (curved length) does not include the length of the irregularities of the tread grooves.

The curved length Lc of the center portion 15 is preferably 10 to 50% of the total curved length L in the width direction on the tread portion surface (that is, the sum of the curved length Lc of the center portion 15, the curved length $L_S$ of the traction portion 18, and the curved length $L_E$ of the edge portion 17), and more preferably 20 to 40%. The curved length $L_S$ of the traction portion 18 is preferably 20 to 60% of the total curved length L in the width direction on the tread portion surface, and more preferably 30 to 50%.

The curved length $L_E$ of the edge portion 17 is preferably 10 to 50% of the total curved length L in the width direction on the tread portion surface, and more preferably 20 to 40%.

The tread portion 13 may be divided into five sections, namely the center portion 15, the traction portion 18, and the edge portion 17, on the tread portion surface, and the portion of the tread portion 13 adjacent to the carcass layer 20 may be a single portion (identical to any one of the center portion 15, the traction portion 18, or the edge portion 17), or may be divided into three sections (any of the center portion 15 and the traction portion 18, the center portion 15 and the edge portion 17, or the traction portion 18 and the edge portion 17) or five sections.

FIG. 2 is a schematic diagram depicting a cross section in the width direction of a tire for two-wheeled vehicles according to another embodiment of the present disclosure. The same reference numerals as in FIG. 1 denote the same elements. In FIG. 2, the tread portion 13 is divided into five sections in the tire width direction on the tread portion 13 surface, including a center portion 15 containing the tire equatorial plane 14, a pair of edge portions 17 each containing a tread edge 16, and a pair of traction portions 18 each disposed between the center portion 15 and the edge portion 17. In the example of FIG. 2, the rubber of the center portion 15 functions as a base rubber 21 on the carcass layer 20 side of the traction portion 18 and the edge portion 17. In the traction portion 18, the rubber of the traction portion 18 is provided on the base rubber 21, and in the edge portion 17, the rubber of the edge portion 17 is provided on the base rubber 21.

The tire for two-wheeled vehicles according to the present disclosure may be any tire for two-wheeled vehicles, and may be a motorcycle tire. The type of two-wheeled vehicle is not particularly limited and may be appropriately selected according to the intended purpose, and examples include competition two-wheeled vehicles, two-wheeled vehicles for running on an ordinary road, on-road two-wheeled vehicles, and off-road two-wheeled vehicles. Among these, two-wheeled vehicles for running on an ordinary road and on-road two-wheeled vehicles are preferable as two-wheeled vehicles in which the effects of the present disclosure are particularly likely to be exhibited, and two-wheeled vehicles for running on an ordinary road are more preferable.

The tire for two-wheeled vehicles according to the present disclosure may be any tire for two-wheeled vehicles, and may be used for either or both of the front tire and the rear tire.

EXAMPLES

Hereinafter, the present disclosure will be described in more detail with reference to examples, but these examples are intended to illustrate the present disclosure and are not intended to limit the present disclosure in any way.

<Example 1, Comparative Examples 1 to 4>

Each rubber composition constituting the center rubber, traction rubber, and edge rubber was prepared in the compounding amounts (parts by mass) indicated in Table 1. The prepared rubber compositions were used for the center portion, traction portion, and edge portion of the tread portion, and a tire for two-wheeled vehicles (size: 180/55ZR17) divided into five sections as illustrated in FIG. 1 was trial-manufactured by a conventional method. The proportions of the center portion, traction portion, and edge portion in the tread portion were set to $L_c$ = 30%, $L_s$ = 40%, and $L_E$ = 30%, respectively.

<Storage modulus E' of tread rubber at 60°C>

The storage modulus E' at 60°C of the center rubber, traction rubber, and edge rubber obtained in each example and comparative example was measured. Specifically, the measurement was conducted at 60°C, a frequency of 52 Hz, and a dynamic strain of 1.0% using a spectrometer manufactured by Ueshima Seisakusho Co., Ltd. Each of the center rubber, traction rubber, and edge rubber was measured, and the results are presented in Table 1.

<Performance evaluation>

(1) Cornering stability

For each tire for two-wheeled vehicles obtained in the examples and comparative examples, a test rider performed cornering on a dry road course, and a subjective evaluation of stability during cornering was conducted. The evaluation results are presented in Table 1. The numerical values are based on a 10-point scale and indicate the difference in points from Comparative Example 1. The larger and more positive the value, the better the result compared to Comparative Example 1; if negative, the result is worse.

(2) Gripping performance (dry gripping performance test)

For each tire for two-wheeled vehicles obtained in the examples and comparative examples, a test rider performed various runs on a dry road course, and a subjective evaluation of the dry gripping performance of the tire during running was conducted. The evaluation results are presented in Table 1. The numerical values are based on a 10-point scale and indicate the difference in points from Comparative Example 1. The larger and more positive the value, the better the result compared to Comparative Example 1; if negative, the result is worse.

(3) Steering stability

For each tire for two-wheeled vehicles obtained in the examples and comparative examples, a test rider conducted an evaluation regarding steering stability on a dry road course. The evaluation results are presented in Table 1. The numerical values are based on a 10-point scale and indicate the difference in points from Comparative Example 1. The larger and more positive the value, the better the result compared to Comparative Example 1; if negative, the result is worse.

[Table 1]

| Portion in Tread Portion | | Comparative Example 1 | | | Comparative Example 2 | | | Comparative Example 3 | | | Comparative Example 4 | | | Example 1 | | |
|---|---|---|---|---|---|---|---|---|---|---|---|---|---|---|---|---|---|
| | | Center | Traction | Edge | Center | Traction | Edge | Center | Traction | Edge | Center | Traction | Edge | Center | Traction | Edge |
| Component Composition | BR *1 | 15.53 | 14.74 | 15 | 15.53 | 14.74 | 15 | 15.53 | 14.74 | 15 | 15.53 | 14.74 | 15 | 15.53 | 14.74 | 15 |
| | Low Tg SBR *2 | | | | | | 27.5 | | | 30 | | | | | | |
| | Medium Tg SBR*3 | | | 116.88 | | | 89.38 | | | 86.88 | | | 116.88 | | | 116.88 |
| | High Tg SBR *4 | 116.15 | 117.24 | | 116.15 | 117.24 | | 116.15 | 117.24 | | 116.15 | 117.24 | | 116.15 | 117.24 | |
| | CB *5 | 15 | 24.6 | 41 | 15 | 24.6 | 90 | 15 | 24.6 | 82 | 15 | 24.6 | 70 | 15 | 24.6 | 70 |
| | Silica *6 | | 85.4 | 64 | | 85.4 | | | 85.4 | | | 85.4 | | | 85.4 | |
| | Fine Particle Silica *7 | 85 | | | 85 | | 25 | 85 | | 23 | 85 | | 45 | 85 | | 45 |
| | Oil *8 | 3 | 11.2 | 21.6 | 3 | 11.2 | 26.6 | 3 | 11.2 | 25.1 | 3 | 11.2 | 43.6 | 3 | 11.2 | 36.6 |
| | Resin A *9 | | 10 | 7.5 | | 10 | | | 10 | | | 10 | | | 10 | |
| | Resin B *10 | 21.1 | 40 | 38.6 | 21.1 | 40 | | 21.1 | 40 | 52.6 | 21.1 | 40 | 37.1 | 21.1 | 40 | |
| | Resin C *11 | | | | | | 33.6 | | | | | | | | | 41.1 |
| | Resin D *12 | | | | | | 17.5 | | | | | | 7 | | | |
| | Wax | | | 3.4 | | | 3.56 | | | 3.56 | | | 3.56 | | | 3.56 |
| | Age Resistor A *14 | | | 0.23 | | | 0.24 | | | 0.27 | | | 0.27 | | | 0.27 |
| | Age Resistor B *15 | | | 3.2 | | | 3.35 | | | 3.7 | | | 3.7 | | | 3.7 |
| | Vulcanization Accelerator A *16 | | | 2.56 | | | 1.76 | | | 2.38 | | | 2.27 | | | 2.34 |
| | Vulcanization Accelerator B *17 | | | 1.39 | | | 0.96 | | | 1.3 | | | 1.24 | | | 1.28 |
| | Vulcanization Accelerator C *18 | | | 4.27 | | | 2.95 | | | 4 | | | 3.81 | | | 3.93 |
| | Sulfur | | | 2.47 | | | 1.7 | | | 2.3 | | | 2.19 | | | 2.26 |
| | Silane Coupling Agent *19 | | | 5.12 | | | 3 | | | 2.76 | | | 5.4 | | | 5.4 |
| | Other Chemicals (Vulcanization Accelerator Aid + handleability Improver) | | | 7.4 | | | 8.4 | | | 8.8 | | | 8.4 | | | 8.4 |

(continued)

| | | Comparative Example 1 | | | Comparative Example 2 | | | Comparative Example 3 | | | Comparative Example 4 | | | Example 1 | | |
|---|---|---|---|---|---|---|---|---|---|---|---|---|---|---|---|---|---|
| | Vulcanization Accelerator Aid | | | 3.5 | | | 3.5 | | | 3.5 | | | 3.5 | | | 3.5 |
| | Handleability Improver | | | 3.9 | | | 4.9 | | | 5.3 | | | 4.9 | | | 4.9 |
| | Other Chemicals *20 | 33.84 | 33.52 | | 33.84 | 33.52 | | 33.84 | 33.52 | | 33.84 | 33.52 | | 33.84 | 33.52 | |
| | Total PHR | 289.62 | 336.7 | 334.62 | 289.62 | 336.7 | 350.5 | 289.62 | 336.7 | 343.65 | 289.62 | 336.7 | 365.42 | 289.62 | 336.7 | 355.72 |
| | Total Oil | 55.78 | 93.18 | 99.58 | 55.78 | 93.18 | 109.58 | 55.78 | 93.18 | 109.58 | 55.78 | 93.18 | 119.58 | 55.78 | 93.18 | 109.58 |
| | Total Filler | 100 | 110 | 105 | 100 | 110 | 115 | 100 | 110 | 105 | 100 | 110 | 115 | 100 | 110 | 115 |
| E' | 0°C | 108.4 | 146.7 | 140.0 | 108.4 | 146.7 | 245.4 | 108.4 | 146.7 | 134.1 | 108.4 | 146.7 | 171.0 | 108.4 | 146.7 | 248.5 |
| | 30°C | 15.4 | 9.7 | 8.8 | 15.4 | 9.7 | 22.1 | 15.4 | 9.7 | 12.1 | 15.4 | 9.7 | 11.9 | 15.4 | 9.7 | 16.1 |
| | 60°C | 10.0 | 5.0 | 4.9 | 10.0 | 5.0 | 10.8 | 10.0 | 5.0 | 6.4 | 10.0 | 5.0 | 6.4 | 10.0 | 5.0 | 9.0 |
| tanδ | 0°C | 0.57 | 0.66 | 0.78 | 0.57 | 0.66 | 0.39 | 0.57 | 0.66 | 0.55 | 0.57 | 0.66 | 0.62 | 0.57 | 0.66 | 0.57 |
| | 30°C | 0.38 | 0.56 | 0.62 | 0.38 | 0.56 | 0.62 | 0.38 | 0.56 | 0.56 | 0.38 | 0.56 | 0.59 | 0.38 | 0.56 | 0.63 |
| | 60°C | 0.23 | 0.30 | 0.32 | 0.23 | 0.30 | 0.51 | 0.23 | 0.30 | 0.40 | 0.23 | 0.30 | 0.40 | 0.23 | 0.30 | 0.42 |
| | Peak Temperature Tp | -4 | 2 | 2 | -4 | 2 | -3 | -4 | 2 | -7 | -4 | 2 | -4 | -4 | 2 | 1 |
| Relationship of E' among Center Rubber, Traction Rubber, and Edge Rubber | | Center> Traction > Edge | | | Edge > Center > Traction | | | Center > Edge > Traction Edge < Center & Traction AVE | | | Center > Edge > Traction Edge < Center & Traction AVE | | | Center > Edge > Traction Edge > Center & Traction AVE | | |
| Cornering Stability Rating | | | 0 | | | 0 | | | -0.5 | | | 0 | | | 0 | |
| GRIP Rating | | | 0 | | | -0.3 | | | -0.3 | | | 0 | | | 0.3 | |

(continued)

| | Comparative Example 1 | | | Comparative Example 2 | | | Comparative Example 3 | | | Comparative Example 4 | | | Example 1 | |
|---|---|---|---|---|---|---|---|---|---|---|---|---|---|---|---|
| Overall Steering Stability Rating | | 0 | | | -0.3 | | | -0.3 | | | 0 | | | 0.2 | |

*1 BR: butadiene rubber, manufactured by ENEOS Materials Corporation, trade name "BR54" *2 Low Tg SBR: styrene-butadiene rubber, proportion of styrene units (bound styrene content) = 17 mass%, manufactured by Asahi Kasei Corporation, trade name "TUFDENE1834" *3 Medium Tg SBR: styrene-butadiene rubber, proportion of styrene units (bound styrene content) = 35.5 mass%, manufactured by Asahi Kasei Corporation, trade name "Tufden E581", oil-extended rubber containing 37.5 parts by mass of extender oil (liquid softener component, liquid at 25°C) per 100 parts by mass of rubber component *4 High Tg SBR: styrene-butadiene copolymer rubber, manufactured by ENEOS Materials Corporation, emulsion-polymerized styrene-butadiene copolymer rubber, trade name "HP755B", oil-extended rubber containing 37.5 parts by mass of extender oil (liquid softener component, liquid at 25°C) per 100 parts by mass of rubber component *5 Carbon black: manufactured by Asahi Carbon Co., Ltd., trade name "Asahi #107" *6 Silica: CTAB specific surface area = 150 $m^2$/g

*7 Fine particle silica: CTAB specific surface area = 191 $m^2$/g

*8 Oil: liquid softener component (liquid at 25°C), manufactured by JX Nippon Oil & Energy Corporation, trade name "A/O MIX" *9 Resin A: aliphatic petroleum resin, manufactured by Zeon Corporation, Quinton M100 *10 Resin B: C5C9 resin, manufactured by ENEOS Corporation, T-REZ RD104 *11 Resin C: hydrogenated resin (hydrogenated C5 resin), manufactured by Eastman, trade name "Impera E1780" (registered trademark), softening point = 130°C, weight-average molecular weight (Mw) = 800 g/mol *12 Resin D: terpene phenol resin, manufactured by Yasuhara Chemical Co., Ltd., YS Polystar S145 *14 Age resistor A: Seiko-Chemical, Nonflex RD *15 Age resistor B: Ouchi Shinko Chemical Industrial Co., Ltd., Nocrack 6C *16 Vulcanization accelerator A: manufactured by Sumitomo Chemical Co., Ltd., SOXINOL (registered trademark) D *17 Vulcanization accelerator B: manufactured by Ouchi Shinko Chemical Industrial Co., Ltd., Nocceler (registered trademark) CZ-G *18 Vulcanization accelerator C: manufactured by Ouchi Shinko Chemical Industrial Co., Ltd., Nocceler TOT-N *19 Silane coupling agent: manufactured by Shin-Etsu Chemical Co., Ltd., trade name "ABC-856" *20 Other chemicals: total amount of wax, age resistor, vulcanizing agent, vulcanization accelerator, vulcanization accelerator aid, handleability improver, silane coupling agent, vulcanization accelerator aid, and handleability improver. The same amount was used in all examples and comparative examples.

EP 4 691 799 A1

It can be seen that the tire for two-wheeled vehicles of Example 1 achieves a higher level of both cornering stability performance and gripping performance compared to the tires for two-wheeled vehicles of Comparative Examples 1 to 3.

INDUSTRIAL APPLICABILITY

According to the present disclosure, it is possible to provide a tire for two-wheeled vehicles having excellent gripping performance without impairing cornering stability.

REFERENCE SIGNS LIST

    10: tire for two-wheeled vehicles
    11: bead portion
    12: sidewall portion
    13: tread portion
    14: tire equatorial plane
    15: center portion
    16: tread edge
    17: edge portion
    18: traction portion
    19: bead core
    20: carcass layer
    21: base rubber

**Claims**

1. A tire for two-wheeled vehicles comprising:

    a pair of bead portions and a pair of sidewall portions, and a tread portion continuous with both of the sidewall portions,
    wherein the tread portion is divided into five sections on a tread portion surface in a tire width direction, the five sections comprising a center portion including a tire equatorial plane, a pair of edge portions each including a tread edge, and a pair of traction portions each disposed between the center portion and the edge portion, and a storage modulus E' at 60°C of a center rubber constituting the center portion, a traction rubber constituting the traction portion, and an edge rubber constituting the edge portion satisfies the following formulae (1) and (2):

    E' of the center rubber > E' of the edge rubber > E' of the traction rubber                    (1)

    E' of the edge rubber > an average value of E' of the center rubber and E' of the traction rubber          (2).

2. The tire for two-wheeled vehicles according to claim 1,
    wherein a loss tangent $\tan\delta$ at 60°C of the center rubber, the traction rubber, and the edge rubber satisfies the following formula (3):

    $\tan\delta$ of the edge rubber > $\tan\delta$ of the traction rubber > $\tan\delta$ of the center rubber                    (3).

3. The tire for two-wheeled vehicles according to claim 1 or 2,
    wherein peak temperatures $T_p$ of the loss tangents of the center rubber, the traction rubber, and the edge rubber satisfy the following formula (4):

    $T_p$ of the traction rubber > $T_p$ of the edge rubber > $T_p$ of the center rubber                    (4).

4. The tire for two-wheeled vehicles according to claim 1 or 2,
   wherein each of the center rubber, the traction rubber, and the edge rubber contains a filler, and a content of the filler is 100 parts by mass or more per 100 parts by mass of a rubber component.

5. The tire for two-wheeled vehicles according to claim 1 or 2,
   wherein each of the center rubber, the traction rubber, and the edge rubber contains an oil and a resin, and a total content of the oil and the resin is 50 to 150 parts by mass per 100 parts by mass of a rubber component.

6. The tire for two-wheeled vehicles according to claim 1 or 2,
   wherein the edge rubber contains fine particle silica having a cetyltrimethylammonium bromide adsorption specific surface area (CTAB) of 180 or more.

7. The tire for two-wheeled vehicles according to claim 1 or 2,
   wherein the edge rubber contains carbon black.

8. The tire for two-wheeled vehicles according to claim 4,
   wherein a content ratio of silica in the filler in the edge rubber is less than 55 mass%.

9. The tire for two-wheeled vehicles according to claim 5,
   wherein the edge rubber contains a hydrogenated resin as the resin.

*FIG. 1*

*FIG. 2*

## INTERNATIONAL SEARCH REPORT

| | International application No. |
|---|---|
| | **PCT/JP2023/043723** |

**A.    CLASSIFICATION OF SUBJECT MATTER**

***B60C 11/00***(2006.01)i; ***B60C 1/00***(2006.01)i; ***C08K 3/013***(2018.01)i; ***C08L 21/00***(2006.01)i; ***C08L 101/00***(2006.01)i
FI:    B60C11/00 C; B60C1/00 A; B60C11/00 D; C08K3/013; C08L21/00; C08L101/00

According to International Patent Classification (IPC) or to both national classification and IPC

**B.    FIELDS SEARCHED**

Minimum documentation searched (classification system followed by classification symbols)

B60C11/00; B60C1/00; C08K3/013; C08L21/00; C08L101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2010-23761 A (BRIDGESTONE CORP.) 04 February 2010 (2010-02-04)<br>    entire text | 1-9 |
| A | JP 2009-51350 A (BRIDGESTONE CORP.) 12 March 2009 (2009-03-12)<br>    entire text | 1-9 |
| A | JP 2007-168531 A (SUMITOMO RUBBER INDUSTRIES, LTD.) 05 July 2007 (2007-07-05)<br>    entire text | 1-9 |
| A | JP 2015-137057 A (BRIDGESTONE CORP.) 30 July 2015 (2015-07-30)<br>    entire text | 1-9 |
| A | WO 2019/117173 A1 (BRIDGESTONE CORP.) 20 June 2019 (2019-06-20)<br>    entire text | 1-9 |
| A | WO 2009/013961 A1 (BRIDGESTONE CORP.) 29 January 2009 (2009-01-29)<br>    entire text | 1-9 |

☑ Further documents are listed in the continuation of Box C.          ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **28 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2023/043723**

### C. DOCUMENTS CONSIDERED TO BE RELEVANT

| Category* | Citation of document, with indication, where appropriate, of the relevant passages | Relevant to claim No. |
|---|---|---|
| A | WO 2021/200098 A1 (BRIDGESTONE CORP.) 07 October 2021 (2021-10-07)<br>entire text | 1-9 |

Form PCT/ISA/210 (second sheet) (July 2022)

## INTERNATIONAL SEARCH REPORT
### Information on patent family members

International application No.

**PCT/JP2023/043723**

| Patent document cited in search report | | | Publication date (day/month/year) | Patent family member(s) | | | Publication date (day/month/year) |
|---|---|---|---|---|---|---|---|
| JP | 2010-23761 | A | 04 February 2010 | (Family: none) | | | |
| JP | 2009-51350 | A | 12 March 2009 | (Family: none) | | | |
| JP | 2007-168531 | A | 05 July 2007 | US | 2007/0137747 | A1 | |
| | | | | EP | 1800906 | A1 | |
| JP | 2015-137057 | A | 30 July 2015 | US | 2016/0339747 | A1 | |
| | | | | WO | 2015/111439 | A1 | |
| | | | | EP | 3098088 | A1 | |
| | | | | CN | 105934355 | A | |
| WO | 2019/117173 | A1 | 20 June 2019 | US | 2021/0213784 | A1 | |
| | | | | EP | 3725549 | A1 | |
| WO | 2009/013961 | A1 | 29 January 2009 | US | 2010/0193095 | A1 | |
| | | | | EP | 2179867 | A1 | |
| | | | | CN | 101795876 | A | |
| WO | 2021/200098 | A1 | 07 October 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016112998 A

- JP 2019038728 A